(19) **Europäisches Patentamt**
**European Patent Office**
**Office européen des brevets**

(11) **EP 4 671 849 A1**

(12) **EUROPEAN PATENT APPLICATION**

(43) Date of publication:
**31.12.2025 Bulletin 2026/01**

(51) International Patent Classification (IPC):
**G02B 27/01** (2006.01)

(21) Application number: **25180541.2**

(52) Cooperative Patent Classification (CPC):
**G02B 27/0179**

(22) Date of filing: **03.06.2025**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.06.2024 JP 2024103970**

(71) Applicant: **CANON KABUSHIKI KAISHA**
**Tokyo 146-8501 (JP)**

(72) Inventors:
• **ATSUTA, Akio**
**Tokyo, 146-8501 (JP)**
• **MORITA, Hiromitsu**
**Tokyo, 146-8501 (JP)**
• **NAGATA, Taiga**
**Tokyo, 146-8501 (JP)**

(74) Representative: **Canon Europe Limited**
**European Intellectual Property Group**
**4 Roundwood Avenue**
**Stockley Park**
**Uxbridge UB11 1AF (GB)**

(54) **VIDEO DISPLAY APPARATUS AND ADJUSTMENT METHOD OF THE SAME**

(57) A video display apparatus includes video display units 102a, 102b, optical elements 103a, 103b, and movement drive units 12 configured to change relative positions of the video display units and the optical elements, wherein the movement drive units determine a stop index position in accordance with a timing at which a user has performed a stop operation, and sets the relative positions using the stop index position as a target by returning a position to the stop index position from a state in which the position exceeds the stop index position.

FIG.1A

**Description**

TECHNICAL FIELD

The present disclosure relates to a video display apparatus and an adjustment method of the same.

BACKGROUND

Some video display apparatuses are used with being mounted on a head of a user, and some other video display apparatuses are used with being worn by the user like eyeglasses. In a video display apparatus, display units are arranged near eyes of the user, and parallax video display processing is performed for the left and right eyes of the user. Parallax videos include depth information indicating whether the user is looking into the far distance or looking into the near distance, and thus by viewing a displayed parallax video, the user can experience a video in which an object displayed in the parallax video is three-dimensional.

In this video display apparatus, the visual line of the user is adjusted to the position of a three-dimensional video generated by videos displayed for the left and right eyes. In this state, a focal position is fixed to each of left and right videos on a display screen. This results in an unnatural state that cannot be caused in the case of the user viewing a real object. In view of this issue, a technique as discussed in Japanese Patent Application Laid-Open Publication No. 2023-32278, for example, has been developed. In Japanese Patent Application Laid-Open Publication No. 2023-32278, a visibility adjustment to depth information corresponding to the position of a point of gaze of the user that is set when the user views a video is performed by driving an optical element included in a display optical system, in accordance with an individual difference and a usage state of the video display apparatus. This technique reduces a feeling of strangeness in stereoscopic viewing.

SUMMARY

The present disclosure has been devised in view of the above-described problem, and is directed to providing a video display apparatus that prevents generation of an adjustment shift in a visibility adjustment and displays a clear video with a relatively-simple configuration, and an adjustment method of the same.

According to a first aspect of the present invention, there is provided a video display apparatus as specified in claim 1. Optional features may be specified in claims 2 to 18.

According to a second aspect of the present invention, there is provided an adjustment method as specified in claim 19. Optional features of the second aspect may be provided by or derivable from claims 2 to 18.

Further features of the present invention will become apparent from the following description of embodiments with reference to the attached drawings.

BRIEF DESCRIPTION OF THE DRAWINGS

Fig. 1A is a diagram illustrating a schematic configuration of an entire video display apparatus according to a first embodiment. Fig. 1B is a side view of a calibration controller.

Figs. 2A and 2B are schematic diagrams each illustrating a state of an optical element being moved by a visibility change drive unit of the video display apparatus according to the first embodiment.

Fig. 3 is a block diagram illustrating an operation circuit of the visibility change drive unit of the video display apparatus according to the first embodiment.

Fig. 4 is a flowchart illustrating a visibility adjustment method in the video display apparatus according to the first embodiment.

Fig. 5 is a timing chart illustrating a state that is caused in response to a button on a calibration controller being pressed according to the first embodiment.

Fig. 6A is a schematic diagram illustrating a configuration of an entire video display apparatus according to a comparative example. Fig. 6B is a side view of a calibration controller according to the comparative example.

Fig. 7 is a timing chart illustrating a state that is caused in response to a button on a calibration controller being pressed according to the comparative example.

Figs. 8A and 8B are flowcharts each illustrating a visibility adjustment method in a video display apparatus according to a modification example of the first embodiment.

Fig. 9A is a schematic diagram illustrating a configuration of an entire video display apparatus according to a second embodiment. Fig. 9B is a side view of a calibration controller according to the second embodiment.

Fig. 10 is a flowchart illustrating a visibility adjustment method in the video display apparatus according to the second embodiment.

Fig. 11 is a timing chart illustrating a state that is caused in response to a button on a calibration controller being pressed according to the second embodiment.

Fig. 12A is a schematic diagram illustrating a configuration of an entire video display apparatus according to a third embodiment. Fig. 12B is a side view of a calibration controller according to the third embodiment.

Fig. 13 is a flowchart illustrating a visibility adjustment method in the video display apparatus according to the third embodiment.

Figs. 14A and 14B are timing charts each illustrating a state that is caused in response to a button on a calibration controller being pressed according to the third embodiment.

Fig. 15A is a schematic diagram illustrating a configuration of an entire video display apparatus according to a fourth embodiment. Fig. 15B is a side view of a calibration controller according to the fourth embodiment.

Fig. 16 is a flowchart illustrating a visibility adjustment method in the video display apparatus according to the fourth embodiment.

Figs. 17A and 17B are timing charts each illustrating a state that is caused in response to a lever of an operation unit in a calibration controller being operated according to the fourth embodiment.

DESCRIPTION OF THE EMBODIMENTS

-Basic Configuration of Video Display Apparatus According to Various Embodiments-

To specifically describe various embodiments, a basic configuration of the video display apparatus according to various embodiments will be described.

A video display apparatus according to an embodiment of the present disclosure includes a video display unit, an optical element, and a movement drive unit that changes relative positions of the video display unit and the optical element. The movement drive unit determines a stop index position in accordance with a timing at which a stop operation is performed, and sets relative positions of the video display unit and the optical element using the stop index position as a target position. In some cases where the movement drive unit is operated to stop, the movement drive unit may not stop at a position corresponding to the stop operation, and, in such cases, a shift occurs by an overrun. For this reason, in the present disclosure, after the overrun, the movement drive unit may perform a movement operation using the determined stop index position as a target position. Specifically, the movement drive unit may set relative positions of the video display unit and the optical element by returning the positions to the stop index position from positions exceeding the stop index position. By performing a stop operation in this manner, it is possible to easily and reliably set the relative positions with as smaller visibility shift as possible that is suitable for the visibility of the user. A video display apparatus having this configuration will be described in detail in the first embodiment.

In view of the above-described basic configuration of the video display apparatus, the present disclosure proposes setting the relative positions further finely and precisely as follows.

According to the present disclosure, in a case where an operation of stopping a moving optical element at an appropriate position is performed when the optical element is driven in a visibility adjustment, an adjustment shift occurred in the visibility adjustment is corrected, which enables clear video display. (1) In visibility adjustment by a stop operation performed by the user, even in a case where the stop operation of the movement drive unit is performed when the user determines that the user views the most appropriate visibility adjustment state, a predetermined time from the time when the determination has been made is inevitably taken until the user performs a stop operation. A stop position shifts from the stop index position by a distance (delay distance) corresponding to the predetermined time. In view of the foregoing, in the present disclosure, the movement drive unit sets relative positions of the video display unit and the optical element using a position obtained by subtracting the delay distance corresponding to the delay of a stop operation of the user, from a position where a stop instruction has been received from the user, as a stop index position. With this configuration, visibility adjustment factoring in a delay of a stop operation of the user is realized, and the relative positions with a further smaller visibility shift are easily and reliably set. A video display apparatus having this configuration will be described in detail in a second embodiment. (2) More specifically, the stop operation includes a start operation, a halfway operation, and an end operation. In a case where the stop operation is a press of a button, for example, a series of operations from the time when the button starts to be pressed, to the time when the press ends corresponds to the stop operation, and a predetermined time is inevitably taken to perform the series of operations. Accordingly, when visibility adjustment is performed by a stop operation performed by the user, even if a stop operation of the movement drive unit is performed when the user determines that the user views the most appropriate visibility adjustment state, a stop position shifts from the stop index position by a distance corresponding to the predetermined time (corresponding stop operation distance). Moreover, because a value of the above-described predetermined time varies due to an individual difference among users, the corresponding stop operation distance also varies among the users. In view of the foregoing, in the present disclosure, the movement drive unit acquires the corresponding stop operation distance using a predetermined time during which the user is performing a stop operation, and sets relative positions of the video display unit and the optical element using a position obtained by subtracting the corresponding stop operation distance from a position where a stop instruction of the user is received, from the stop index position. With this configuration, visibility adjustment factoring in a time taken to perform a series of operations as a stop operation of the user is realized, and relative positions with a further smaller visibility shift is easily and reliably set. A video display apparatus having this configuration will be described in detail in a third embodiment. (3) As a specific example of the stop operation, aside from the press of the button described in (2), for example, an operation of using an inclination lever included in an operation unit is also applicable. In this case, a series of operations of returning from a lever-inclined state to a non-inclined state corresponds to a stop operation, and a predetermined time is inevitably taken to perform the series of operations. Accordingly, when visibility adjustment is performed in response to a stop operation of the user, even if a stop operation of the movement drive unit is performed when the user determines that the user views the most appropriate visibility adjustment state, a stop position shifts from the stop index position by a distance (corresponding stop operation distance) corresponding to the predetermined time. In this case, an operation performed by the user in the stop operation is an operation of releasing the lever when it is determined that the user views the most appropriate visibility adjustment state, and then, the lever automatically returns to a non-inclined state. Accordingly, a predetermined time taken to return to the non-inclined state from a lever-inclined state is a constant value irrespective of the user. In the present disclosure, the movement drive unit acquires a corresponding stop operation distance using a release position set when the operation unit ends the stop operation, and sets relative positions of the video display unit and the optical element using a position obtained by subtracting the corresponding stop operation distance from the release position, as a stop index position. With this configuration, because the above-described predetermined time is a substantially constant value irrespective of the user, a stop index position is able to be determined by relatively-simple calculation that uses a constant number, and relative positions with a small visibility shift are easily and reliably set. A video display apparatus having this configuration will be described in detail in a fourth embodiment.

-Specific Description of Various Embodiments-

The various embodiments of the present disclosure will be described in detail below with reference to the drawings. It should be noted that the following embodiments are not intended to limit the invention as claimed. The various embodiments include multiple features, but not all of these features are essential, and the features may be combined arbitrarily or where there is a benefit. That is to say, each of the embodiments of the present disclosure can be implemented solely or as a combination of a plurality of the embodiments. Each feature or element of each embodiment of the present disclosure can be implemented as a combination of features of elements in a single embodiment. Each modification of one embodiment may be combined with one or more other modifications of the same embodiment. Each modification of one embodiment may be combined with one or more modification of the same embodiment or another embodiment wherein appropriate. Furthermore, in the drawings, the same or similar components are denoted by the same reference numerals, and redundant descriptions are omitted.

Hereinafter, a first embodiment of the present disclosure will be described.

(Configuration of Video Display Apparatus)

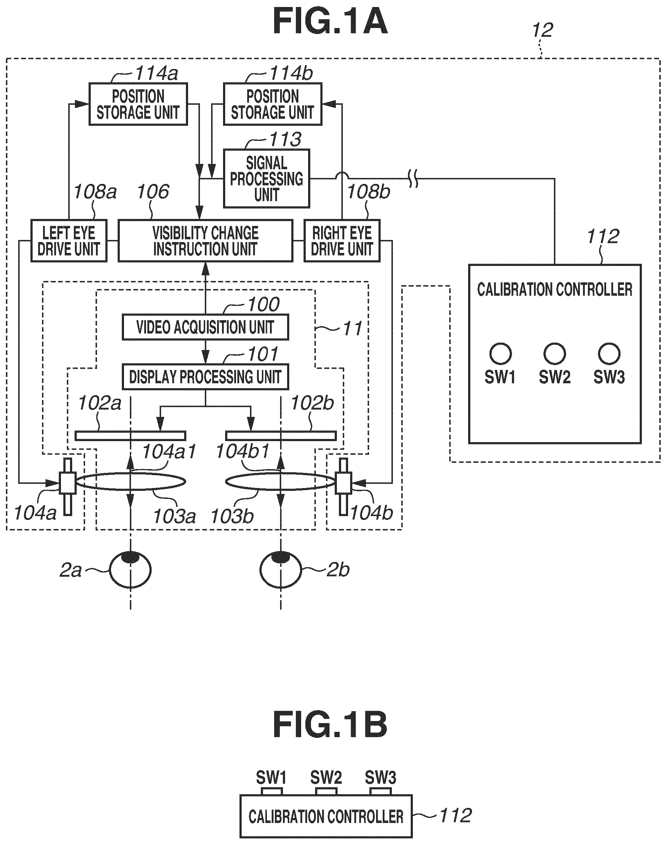

Figs. 1A and 1B are diagrams illustrating a schematic configuration of a video display apparatus according to the first embodiment. Fig. 1A is an apparatus overall view, and Fig. 1B is a side view of a calibration controller 112.

The video display apparatus includes a video display unit 11 on which a video is displayed, and a movement drive unit 12. The video display apparatus excluding the calibration controller 112 to be described below is available in two configurations: one that is worn by the user on his or her head, and another that is worn by the user like glasses. In both configurations, the video display apparatus is able to be fixed near a left eye 2a and a right eye 2b of the user. The left eye of the user is denoted by 2a and the right eye is denoted by 2b, and the components are distinguished by adding the letter "a" to components relating to the left eye 2a and adding the letter "b" to components relating to the right eye 2b.

The video display unit 11 includes a video acquisition unit 100, a display processing unit 101, a pair of video display units 102a and 102b, and a pair of optical elements 103a and 103b.

The video acquisition unit 100 acquires video data for display via an external apparatus and a network. The display processing unit 101 performs display magnification adjustment processing on the video data acquired by the video acquisition unit 100. The video display units 102a and 102b display videos based on the transmitted video data processed by the display processing unit 101. Examples of the configuration include dividing video data into video data pieces for the video display units 102a and 102b and displaying the video data on them. A configuration is not limited to this, and a configuration of dividing a screen of one video display unit into two, and displaying video data on the divided screens may be employed. By such video processing adapted to the right eye and the left eye, the user is enabled to view a video without a feeling of strangeness. The optical elements 103a and 103b include lenses respectively corresponding to the left eye 2a and the right eye 2b. Videos displayed on the video display units 102a and 102b are presented to the left eye 2a and the right eye 2b through the optical elements 103a and 103b.

The movement drive unit 12 is a movement drive unit that changes relative positions of the video display units 102a and 102b and the optical elements 103a and 103b. In the present embodiment, the movement drive unit 12 moves the optical elements 103a and 103b relative to the video display units 102a and 102b. The movement drive unit 12 includes visibility change drive units 104a and 104b, a visibility change instruction unit 106, drive units 108a and 108b, the calibration controller 112, a signal processing unit 113, and position storage units 114a and 114b serving as a first storage unit.

The visibility change drive units 104a and 104b each include a vibration-type actuator including a drive source, such as an ultrasonic motor, are connected with the optical elements 103a and 103b, respectively, and perform a movement operation of the optical elements 103a and 103b. The optical elements 103a and 103b are moved by the visibility change drive units 104a and 104b within a section along its optical axes (indicated by arrows 104a1 and 104b1). The visibility change drive units 104a and 104b respectively include position detection sensors, and by the position detection sensors, acquire position information of the optical elements 103a and 103b in the section.

The visibility change instruction unit 106 receives an electric signal from the signal processing unit 113 and issues instructions to the drive unit 108a for the left eye and the drive unit 108b for the right eye. The drive units 108a and 108b receive a drive signal from the visibility change instruction unit 106 and drive the visibility change drive units 104a and 104b based on the drive signal.

The calibration controller 112 performs visibility adjustment of the user by moving and stopping the optical elements 103a and 103b based on a user operation. The calibration controller 112 at least includes a button SW1, a button SW2, and a button SW3. The button SW1 is a switch for starting a calibration operation. The button SW2 is a switch for starting the driving of the visibility change drive units 104a and 104b. The button SW3 is a switch for stopping the driving of the visibility change drive units 104a and 104b at a stop position.

In the movement drive unit 12, the calibration controller 112 is configured to be electrically connected with and separated from the signal processing unit 113 that processes an electric signal transmitted from the calibration controller 112. With this configuration, when the user observes a video on a video display apparatus, an apparatus main body is usable by separating the calibration controller 112, and this improves the convenience of the user.

The position storage units 114a and 114b store a stop index position of the optical elements 103a and 103b to be stopped by the visibility change drive units 104a and 104b which are vibration-type actuators, at a timing at which the button SW3 of the calibration controller 112 is pressed by the user.

In the video display unit 11 and the movement drive unit 12 described above, the video acquisition unit 100, the display processing unit 101, the drive units 108a and 108b, and the signal processing unit 113 are implemented by one or more processors, such as a central processing unit (CPU), executing programs.

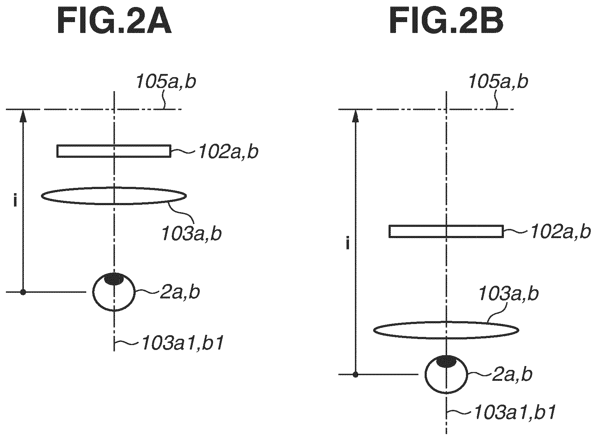

Figs. 2A and 2B are schematic diagrams each illustrating a state of the optical elements 103a and 103b being moved by the visibility change drive units 104a and 104b. Fig. 2A illustrates a state of the optical elements 103a and 103b moved to the vicinity of the video display units 102a and 102b, and Fig. 2B illustrates a state of the optical elements 103a and 103b moved to the vicinity of the eyes 2a and 2b.

A user of the video display apparatus as an observer views virtual images 105a and 105b when the user views the video display units 102a and 102b with the eyes 2a and 2b through the optical elements 103a and 103b. With respect to the positions of the eyes 2a and 2b of the user, the positions of the virtual images 105a and 105b in a direction along optical axes 103a1 and 103b1 are defined as virtual image formation positions i.

As illustrated in Figs. 2A and 2B, by changing the positions of the optical elements 103a and 103b, the virtual image formation position i is changed. For example, as the optical elements 103a and 103b approach the video display units 102a and 102b, the virtual image formation position i moves closer to the eyes 2a and 2b. In contrast, as the optical elements 103a and 103b move closer to the eyes 2a and 2b, the virtual image formation position i moves away from the eyes 2a and 2b. Accordingly, by moving the optical elements 103a and 103b using the visibility change drive units 104a and 104b, a video of an object existing in the far distance or an object existing in the near distance is able to be viewed without defocusing, in accordance with visibility adjustment, i.e., visual power of the eyes 2a and 2b of the user. A displayed video includes, as depth information, a difference indicating whether a point of gaze exists in the far distance or in the near distance. In a case where the depth information coincides with the visibility of the user, the video appears clear to the user.

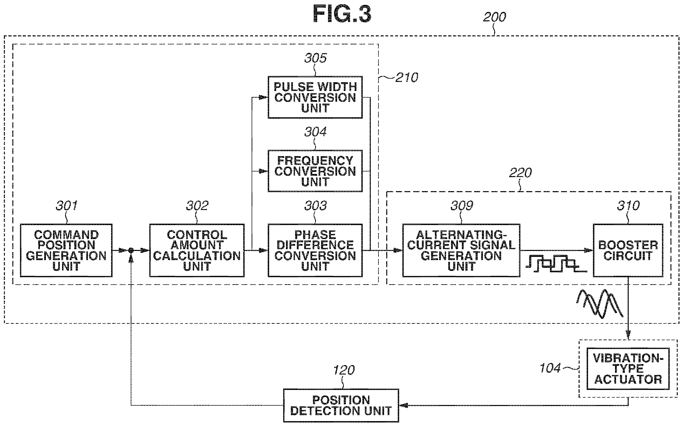

Fig. 3 is a block diagram illustrating an operation circuit of the visibility change drive units 104a and 104b.

The visibility change drive units 104a and 104b each include a vibration-type actuator 104, a position detection unit 120, and a vibration-type drive apparatus 200.

The vibration-type drive apparatus 200 includes a control unit 210 and a drive unit 220. The control unit 210 outputs a control signal to control the driving of the vibration-type actuator 104. Based on the control signal output from the control unit 210, the drive unit 220 outputs an alternating-current signal as a drive signal to drive the vibration-type actuator 104.

The control unit 210 includes a command position generation unit 301, a control amount calculation unit 302, a phase difference conversion unit 303, a frequency conversion unit 304, and a pulse width conversion unit 305. The drive unit 220 includes an alternating-current signal generation unit 309 and a booster unit 310. Each component included in the control unit 210 performs a specific operation in accordance with an output (control signal). The control unit 210 is a so-called microcomputer and includes electrical component, such as a central processing unit (CPU), a memory storing a program, and a memory serving as a work area into which a program is loaded. The control unit 210 generates an electric signal including information for use in controlling the driving of the vibration-type actuator 104.

The position detection unit 120 is an encoder, for example, and detects the position of a movable member of the vibration-type actuator 104, which is the optical elements 103a and 103b connected to the vibration-type actuator 104. The command position generation unit 301 generates a command position to move the movable member of the vibration-type actuator 104. An electric signal regarding a deviation between the command position, which is an output of the command position generation unit 301, and an output of the position detection unit 120 is input to the control amount calculation unit 302.

(Visibility Adjustment Method in Video Display Apparatus)

Hereinafter, a visibility adjustment method in the video display apparatus according to the present embodiment will be described.

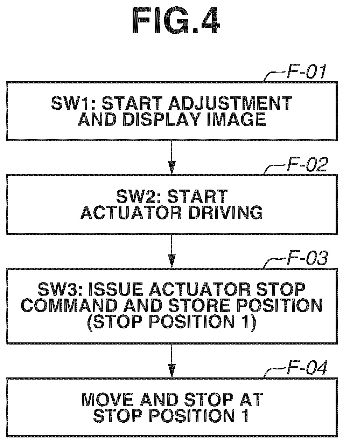

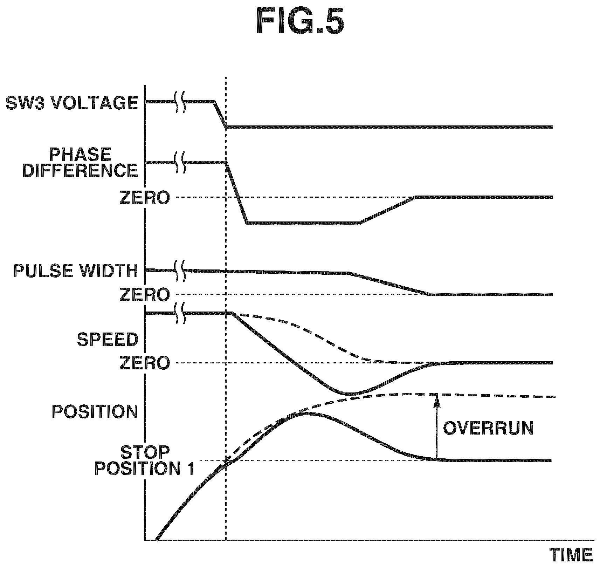

Fig. 4 is a flowchart illustrating a visibility adjustment method in the video display apparatus according to the present embodiment. Fig. 5 is a timing chart illustrating a state that is caused in response to the button SW3 being pressed in the calibration controller 112. Fig. 5 illustrates a voltage of the button SW3, a phase difference, a pulse width, an actuator speed, and the positions of the optical element including a stop position.

In order to perform calibration according to the present embodiment, the user presses the button SW1 of the calibration controller 112 and starts a calibration operation. In this processing, in step F-01, the video display unit 11 displays a video for calibration on the video display units 102a and 102b.

In step F-02, the user presses the button SW2 of the calibration controller 112. In response to the pressing, the movement drive unit 12 drives the visibility change drive units 104a and 104b to perform the visibility adjustment.

In step F-03, while viewing the video on the video display unit 11, the user searches for a position where visibility is adjusted (position where the video is in focus and easy to be observed), and presses the button SW3 when the optical elements 103a and 103b reach the position where the video is observed most appropriately. In response to the pressing, an electric signal serving as a stop command is transmitted to the visibility change drive units 104a and 104b in the movement drive unit 12. Together with this processing, actuator positions, i.e., the positions of the optical elements 103a and 103b with respect to the video display units 102a and 102b, at a timing at which the button SW3 has been pressed are stored into the position storage units 114a and 114b as a stop position 1 being a stop index position.

Even when the visibility change drive units 104a and 104b receive a stop command and stop the driving of the actuators, the optical elements 103a and 103b do not stop immediately due to inertia. In this case, an overrun of the optical elements 103a and 103b inevitably occurs during a period from the time when the stop command has been received to the time when the optical elements 103a and 103b stop. In the present embodiment, from the time when the stop command has been received, the movement drive unit 12 inversely drives the actuators of the visibility change drive units 104a and 104b. Using information regarding the stop position 1 stored in the position storage units 114a and 114b, the movement drive unit 12 returns the visibility change drive units 104a and 104b by an overrun distance. In step F-04, the optical elements 103a and 103b move to the stop position 1 and stop.

As described above, in the video display apparatus, the visibilities of the right eye 2b and the left eye 2a of the user are simultaneously adjusted.

In the present embodiment, ultrasonic motors are used as the actuators of the visibility change drive units 104a and 104b. In this case, by reversing a phase difference of a drive waveform during inverse driving, drive force in an inverse direction is generated, and an operation of moving in the inverse direction after the movement of the optical elements 103a and 103b stops is performed at high speed.

Here, a comparative example of the present embodiment will be described.

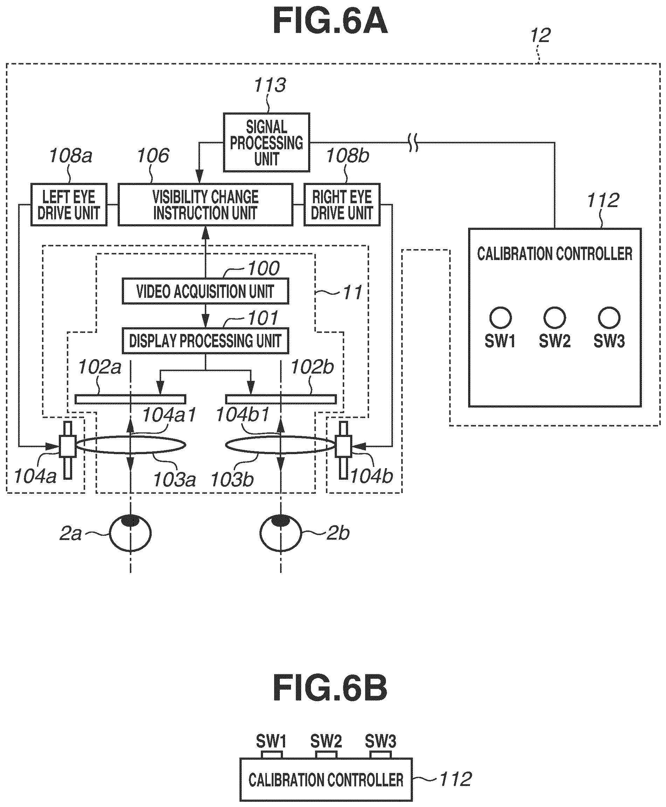

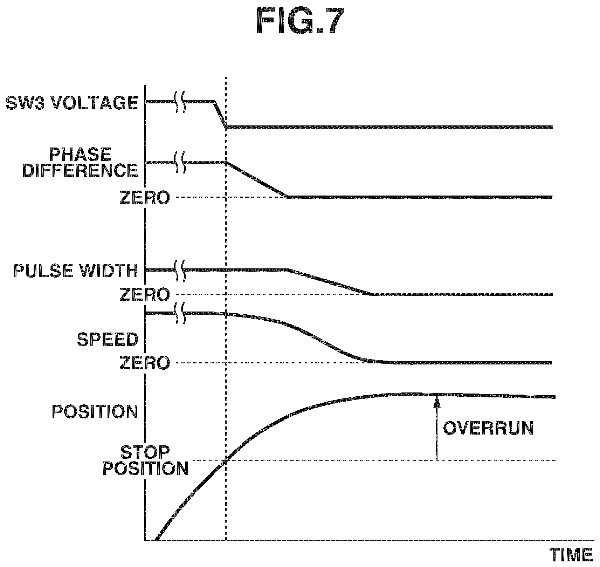

Figs. 6A and 6B are schematic diagrams illustrating a configuration of a video display apparatus according to the comparative example. Fig. 6A is an apparatus overall view, and Fig. 6B is a side view of the calibration controller 112 according to the comparative example. In Figs. 6A and 6B, the same components as those illustrated in Figs. 1A and 1B are assigned the same reference numerals, and the detailed description will be omitted. Fig. 7 is a timing chart illustrating a state that is caused in response to the button SW3 being pressed in the calibration controller 112 according to the comparative example. Fig. 7 illustrates a voltage of the button SW3, a phase difference, a pulse width, an actuator speed, and the positions of the optical element including a stop position.

In this comparative example, control is performed in such a manner that a phase difference and a pulse width of an alternating-current signal become zero at a timing at which the button SW3 is pressed, and an actuator speed is decelerated. Nevertheless, because a stop operation starts from the moment at which the button SW3 is pressed, actually, there arises the issue that overrun occurs, which results in a position shift from the position where the button SW3 has been pressed. If overrun occurs in this manner, a position deviating from an appropriate stop position viewed by the user on the video display apparatus is set as an adjustment position.

In contrast to this, in the present embodiment, the movement drive unit 12 performs an operation to return the optical elements 103a and 103b, which have moved excessively, to the stop position 1 which is a position of a timing at which the button SW3 has been pressed. This offsets the overrun that occurs after the button SW3 has been pressed, and the optical elements 103a and 103b stop at positions as closer as possible to a stop position set by the user, and video adjustment most appropriate for the user is performed.

As described above, according to the present embodiment, the video display apparatus that displays a clear video by preventing generation of an adjustment shift in visibility adjustment is implemented with a relatively-simple configuration.

[Modification Example]

Hereinafter, a modification example of the present embodiment will be described. In this modification example, a video display apparatus with a configuration adapted also to a user who has visual power varying between the left and the right eyes will be described.

The video display apparatus according to the modification example has a schematic configuration similar to the schematic configuration illustrated in Fig. 1A that has been described in the first embodiment.

In the modification example, by initially pressing the button SW1 twice consecutively, for example, in the calibration controller 112, video display apparatus is set to a left eye adjustment mode. In response to pressing performed on the button SW1 three consecutive times, the video display apparatus is set to a right eye adjustment mode. For example, in response to pressing performed on the button SW1 four consecutive times (or pressing the button SW2 once), the video display apparatus is set to a both eyes adjustment mode similarly to the first embodiment.

Hereinafter, a visibility adjustment method in the video display apparatus according to the modification example will be described.

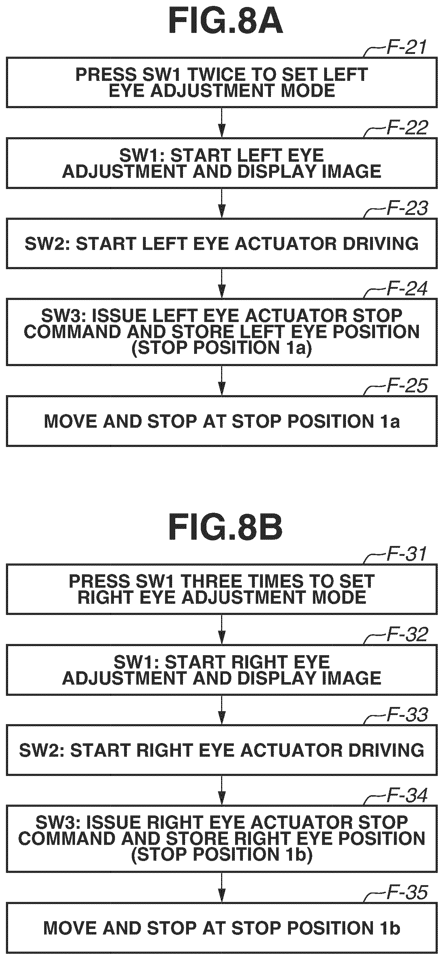

Figs. 8A and 8B are flowcharts each illustrating a visibility adjustment method in the video display apparatus according to the modification example of the first embodiment. Fig. 8A corresponds to the left eye adjustment mode, and Fig. 8B corresponds to the right eye adjustment mode.

<Left Eye Adjustment Mode>

As illustrated in Fig. 8A, in step F-21, in order to initially perform calibration for the left eye, the user presses the button SW1 of the calibration controller 112 twice consecutively. In response to the pressing, the video display apparatus is set to the left eye adjustment mode.

In step F-22, the user presses the button SW1 once after a predetermined time and starts a calibration operation in the left eye adjustment mode. In this processing, the video display unit 11 displays a video for calibration only on the video display unit 102a. No video is displayed on the video display unit 102b.

In step F-23, the user presses the button SW2 of the calibration controller 112. In response to the pressing, the movement drive unit 12 drives the visibility change drive unit 104a to perform the visibility adjustment of the left eye 2a. The visibility change drive unit 104b is not driven.

In step F-24, while viewing the video on the video display unit 11, the user searches for a position where the visibility of the left eye 2a is adjusted (position where the video is in focus and easy to be observed), and presses the button SW3 when the optical element 103a reaches the position where the video is observed most appropriately. In response to the pressing, an electric signal serving as a stop command is transmitted to the visibility change drive unit 104a in the movement drive unit 12. Together with this processing, an actuator position, i.e., the position of the optical element 103a with respect to the video display unit 102a, at a timing at which the button SW3 has been pressed is stored into the position storage unit 114a as a stop position 1a, which is a stop index position.

Even when the visibility change drive unit 104a receives a stop command and stops the driving of the actuator, the optical element 103a does not stop immediately due to inertia. In this case, an overrun of the optical element 103a inevitably occurs during a period from the time when the stop command is received to the time when the optical element 103a stops. In the modification example, from the time when the stop command is received, the movement drive unit 12 inversely drives the actuator of the visibility change drive unit 104a. Using information regarding the stop position 1a stored in the position storage unit 114a, the movement drive unit 12 returns the visibility change drive unit 104a by an overrun distance. In step F-25, the optical element 103a moves to the stop position 1a and stops.

<Right Eye Adjustment Mode>

As illustrated in Fig. 8B, in step F-31, in order to initially perform calibration for the right eye, the user presses the button SW1 of the calibration controller 112 three consecutive times. In response to the pressing, the video display apparatus is set to the right eye adjustment mode.

In step F-32, the user presses the button SW1 once after a predetermined time and starts a calibration operation in the right eye adjustment mode. In this processing, the video display unit 11 displays a video for calibration only on the video display unit 102b. No video is displayed on the video display unit 102a.

In step F-33, the user presses the button SW2 of the calibration controller 112. In response to the pressing, the movement drive unit 12 drives the visibility change drive unit 104b to perform the visibility adjustment of the right eye 2b. The visibility change drive unit 104a is not driven.

In step F-34, while viewing the video on the video display unit 11, the user searches for a position where the visibility of the right eye 2b is adjusted (position where the video is in focus and easy to be observed), and presses the button SW3 when the optical element 103b reaches the position where the video is observed most appropriately. In response to the pressing, an electric signal serving as a stop command is transmitted to the visibility change drive unit 104b in the movement drive unit 12. Together with this processing, an actuator position, i.e., the position of the optical element 103b with respect to the video display unit 102b, at a timing at which the button SW3 has been pressed is stored into the position storage unit 114b as a stop position 1b, which is a stop index position.

Even in a case where the visibility change drive unit 104b receives a stop command and stops the driving of the actuator, the optical element 103b does not stop immediately due to inertia. In this case, an overrun of the optical element 103b inevitably occurs during a period from the time when the stop command is received to the time when the optical element 103b stops. In the modification example, from the time when the stop command has been received, the movement drive unit 12 inversely drives the actuator of the visibility change drive unit 104b. Using information regarding the stop position 1b stored in the position storage unit 114b, the movement drive unit 12 returns the visibility change drive unit 104b by an overrun distance. In step F-35, the optical element 103b moves to the stop position 1b and stops.

In the modification example, the case of changing an adjustment mode using the button SW1 of the calibration controller 112 according to the first embodiment has been discussed, but the configuration is not limited to this. For example, a changeover switch for changing the adjustment mode may be provided aside from the buttons SW1 to SW3, and the setting of the left eye adjustment mode, the right eye adjustment mode, or the both eyes adjustment mode may be performed using the changeover switch. Different control patterns, i.e. button presses, may be provided to initiate the adjustment mode for each eye, for example right eye may be two button process while left eye is three button presses, that is to say that to initiate an adjustment mode for a respective eye a different number of button presses is required. Additionally or alternatively, the control pattern to initiate the adjustment mode may be based on length of time that a button is depressed or similar, for example 2 second press may enter left eye adjustment mode while a three second press may enter right eye adjustment mode. Put more generally, the calibration controller 112 may use some type of control logic or control switch enter into eye adjustment mode. The control logic to enter into the left eye adjustment mode is different to that of the right eye adjustment mode.

As described above, in the video display apparatus, the visibilities of the right eye 2b and the left eye 2a of the user are sequentially and independently adjusted.

According to this modification example, a video display apparatus that performs accurate visibility adjustment for each of the left and right eyes even in a case where the visual power of the user varies between the left and right eyes, to prevent generation of an adjustment shift in the visibility adjustment and to be able to display a clear video, is implemented with a relatively-simple configuration.

Subsequently, a second embodiment of the present disclosure will be described.

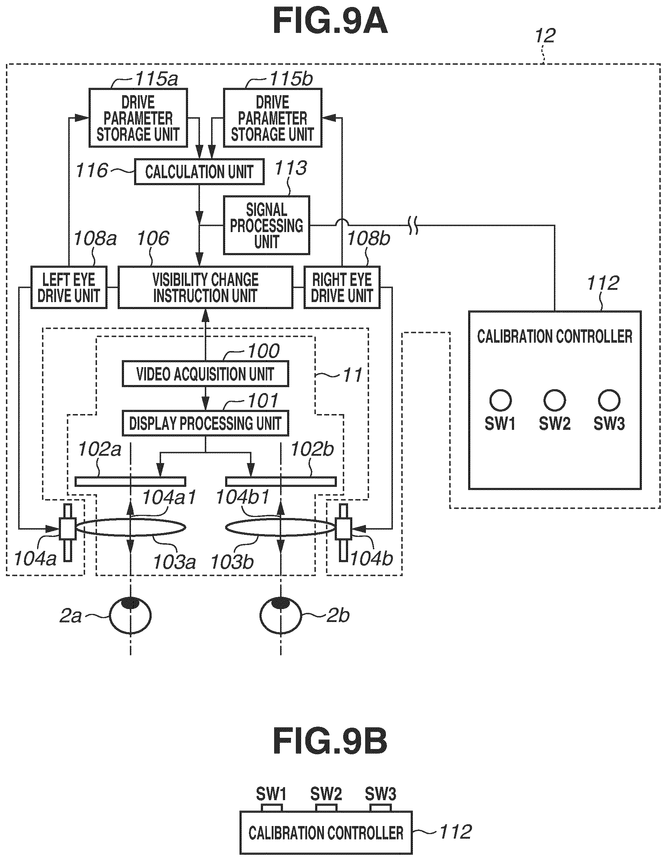

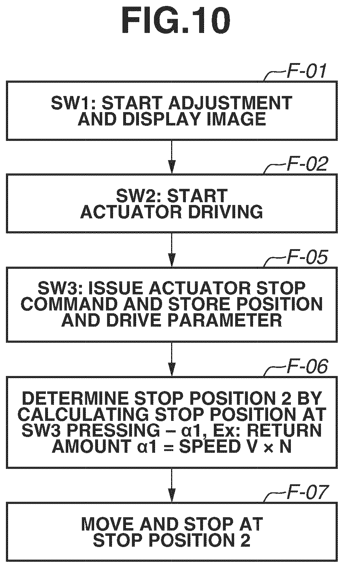

Figs. 9A and 9B are schematic diagrams illustrating a configuration of a video display apparatus according to the present embodiment. Fig. 9A is an apparatus overall view, and Fig. 9B is a side view of a calibration controller 112 according to the present embodiment. In Figs. 9A and 9B, the same components as those illustrated in Figs. 1A and 1B are assigned the same reference numerals, and the detailed description will be omitted. Fig. 10 is a flowchart illustrating a visibility adjustment method in the video display apparatus according to the present embodiment.

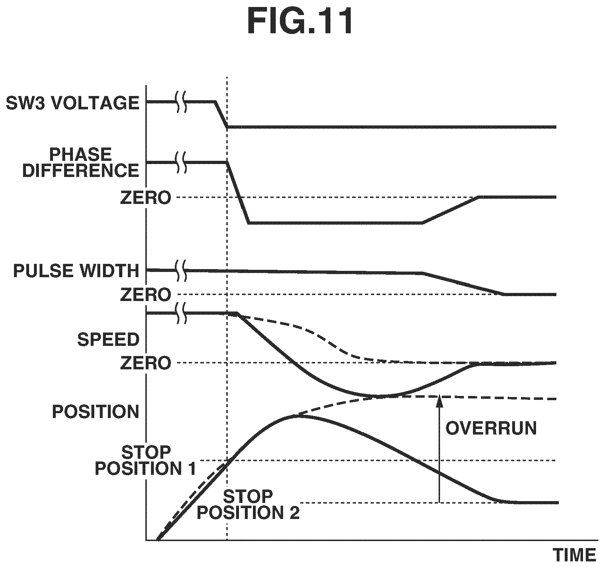

Fig. 11 is a timing chart illustrating a state that is caused in response to the button SW3 being pressed in the calibration controller 112. Fig. 11 illustrates a voltage of the button SW3, a phase difference, a pulse width, an actuator speed, and the positions of the optical element including a stop position.

(Configuration of Video Display Apparatus)

In the video display apparatus according to the present embodiment, as illustrated in Fig. 9A, a movement drive unit 12 includes drive parameter storage units 115a and 115b serving as a second storage unit, in place of the position storage units 114a and 114b according to the first embodiment in Fig. 1A. The movement drive unit 12 further includes a calculation unit 116.

In addition to the stop position 1 of optical elements 103a and 103b, the drive parameter storage units 115a and 115b store various drive parameters, such as an actuator speed serving as a movement speed of the optical elements 103a and 103b, a drive frequency, a phase difference, and a pulse width. The various drive parameters stored in the drive parameter storage units 115a and 115b may also include a quantified parameter of personal characteristics (age, habit, etc.) of the user. Here, the actuator speed, the drive frequency, the phase difference, and the pulse width are values obtained when visibility change drive units 104a and 104b as vibration-type actuators receive a stop instruction in response to pressing performed on the button SW3 of the calibration controller 112. The parameter of the personal characteristics of the user is a numerical value preliminarily input by the user to the video display apparatus.

Using the various drive parameters stored in the drive parameter storage units 115a and 115b, the calculation unit 116 calculates a stop position 2 which is a more appropriate stop index position of the optical elements 103a and 103b. Information regarding the calculated stop position 2 is stored in the drive parameter storage units 115a and 115b.

(Visibility Adjustment Method in Video Display Apparatus)

Hereinafter, a visibility adjustment method in the video display apparatus according to the present embodiment will be described.

s

In step F-01, the user presses the button SW1 of the calibration controller 112 to perform calibration according to the present embodiment and starts a calibration operation. In this processing, the video display unit 11 displays a video for calibration on video display units 102a and 102b.

In step F-02, the user presses the button SW2 of the calibration controller 112. In response to the pressing, the movement drive unit 12 drives the visibility change drive units 104a and 104b to perform a visibility adjustment.

In step F-05, while viewing the video on the video display unit 11, the user searches for a position where visibility is adjusted (position where the video is in focus and easy to be observed), and presses the button SW3 when the optical elements 103a and 103b reach the position where the video is observed most appropriately. In response to the pressing, an electric signal serving as a stop command is transmitted to the visibility change drive units 104a and 104b in the movement drive unit 12. Together with this processing, various drive parameters, such as the stop position 1 serving as an actuator position set at a timing at which the button SW3 has been pressed, a speed, a drive frequency, a phase difference, a pulse width, and personal characteristics of the user are stored into the drive parameter storage units 115a and 115b. The personal characteristics of the user (predetermined numerical values regarding age, habit, etc.) are preliminarily stored into the drive parameter storage units 115a and 115b appropriately, for example.

Even in a case where the user presses the button SW3 when the user visually recognizes visibility adjustment, while viewing a video on the video display unit 11, a time (delay time) from the visual recognition until the pressing is inevitably taken. Accordingly, actually, a position (hereinafter, will be referred to as the stop position 1) when the button SW3 has been pressed shifts from a position (hereinafter, will be referred to as the stop position 2) when visibility adjustment has been visually recognized, by a distance corresponding to the delay time (corresponding delay distance). In the present embodiment, a corresponding delay distance due to an operation delay of the user is factored in. In step F-06, using an actuator drive speed obtained when the button SW3 has been pressed and a stop command has been received, a drive frequency, a phase difference, and a pulse width, and various drive parameters, such as personal characteristics of the user, the calculation unit 116 determines the stop position 2 by calculating a return amount $\alpha 1$ which is the corresponding delay distance. Information regarding the determined stop position 2 is stored into the drive parameter storage units 115a and 115b. In this manner, by calculating the return amount $\alpha 1$ using the various drive parameters, an accurate return amount $\alpha 1$ as possible is able to be acquired.

The return amount $\alpha 1$ and the stop position 2 are represented as follows:

$$\alpha 1 = V \times N \quad ,$$

and

$$\text{Stop Position 2} = \text{Stop Position 1} - \alpha 1 \quad ,$$

where V denotes an actuator drive speed obtained when the button SW3 has been pressed and a stop command has been received, and N denotes a coefficient determined from a drive frequency, a phase difference, a pulse width, and personal characteristics of the user.

The movement drive unit 12 inversely drives the actuators of the visibility change drive units 104a and 104b from the stop position 2 where a stop command has been received. Using the information regarding the stop position 2 calculated and stored in step F-06, the movement drive unit 12 returns the optical elements 103a and 103b by an overrun distance using the visibility change drive units 104a and 104b. In step F-07, the optical elements 103a and 103b move to the stop position 2 and stop.

As described above, in the video display apparatus, the visibilities of the right eye 2b and the left eye 2a of the user are simultaneously adjusted.

In this manner, in the present embodiment, the movement drive unit 12 performs driving of returning the optical elements 103a and 103b, which have moved excessively, to the stop position 2 which has been calculated using the various drive parameters and is a position at which the user has visually recognized the visibility adjustment. The overrun that occurs after the user has visually recognized the visibility adjustment is offset, and the optical elements 103a and 103b are caused to stop at positions as closer as possible to a position at which the user desires to stop the optical elements 103a and 103b, whereby video adjustment most appropriate for the user is performed.

As described above, according to the present embodiment, a video display apparatus that prevents generation of an adjustment shift in a visibility adjustment and is able to display a clear video is implemented with a relatively-simple configuration.

Also in the present embodiment, similarly to the modification example of the first embodiment, the above-described visibility adjustment may be performed sequentially and independently for the right eye 2b and the left eye 2a of the user. In this case, even in a case where visual power varies between the left and right eyes of the user, visibility adjustment is performed for each of the left and right eyes to prevent an occurrence of an adjustment shift in a visibility adjustment, whereby a clear video is able to be displayed.

A third embodiment of the present disclosure will be described.

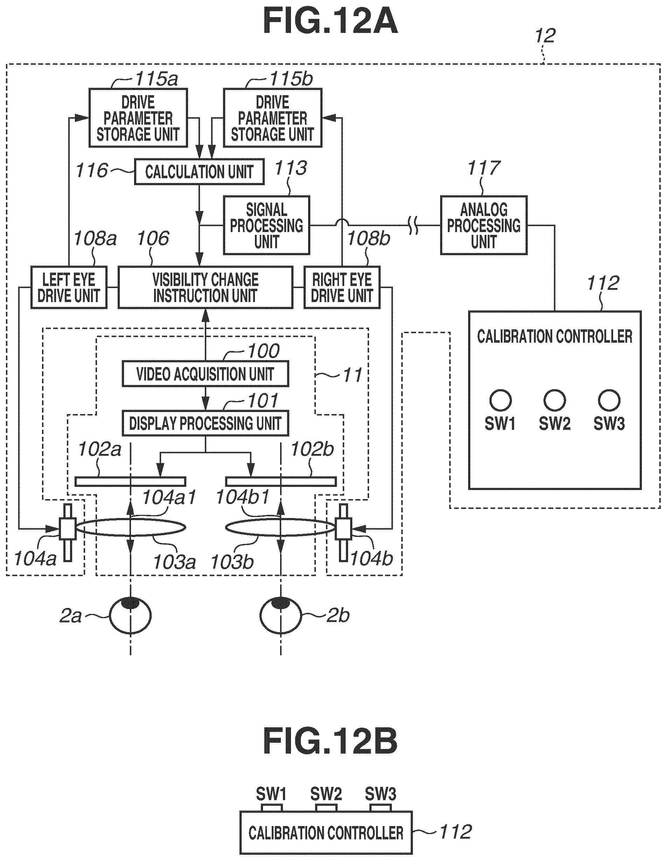

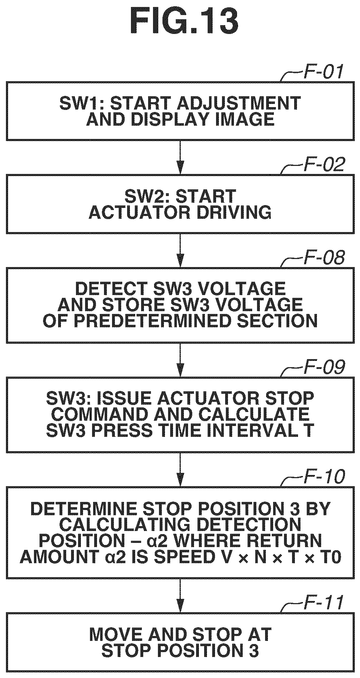

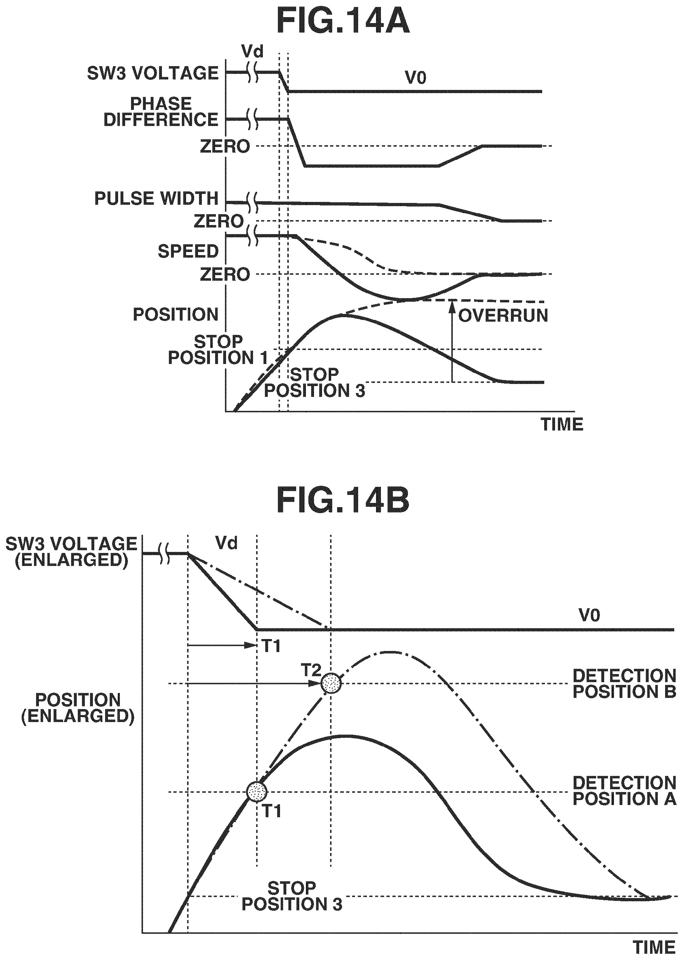

Figs. 12A and 12B are schematic diagrams illustrating a configuration of a video display apparatus according to the present embodiment. Fig. 12A is an apparatus overall view, and Fig. 12B is a side view of a calibration controller 112. In Figs. 12A and 12B, the same components as those illustrated in Figs. 1A and 1B are assigned the same reference numerals, and the detailed description will be omitted. Fig. 13 is a flowchart illustrating a visibility adjustment method in the video display apparatus according to the present embodiment. Figs. 14A and 14B are timing charts each illustrating a state that is caused in response to the button SW3 being pressed in the calibration controller 112 according to the present embodiment. Fig. 14A illustrates a voltage of the button SW3, a phase difference, a pulse width, an actuator speed, and the positions of the optical element including a stop position, and Fig. 14B illustrates the voltage of the button SW3 and positions in an enlarged manner.

(Configuration of Video Display Apparatus)

In the video display apparatus according to the present embodiment, in addition to the components according to the second embodiment in Figs. 9A and 9B, an analog processing unit 117 for detecting on/off operations of the button SW3 more precisely is provided. A calculation unit 116 detects a time interval T at which the user operates the button SW3, and determines a stop position 3 which is a stop index position, in accordance with the time interval T.

(Visibility Adjustment Method in Video Display Apparatus)

Hereinafter, a visibility adjustment method in the video display apparatus according to the present embodiment will be described.

In step F-01, the user presses the button SW1 of the calibration controller 112 to perform calibration according to the present embodiment and starts a calibration operation. In this processing, the video display unit 11 displays a video for calibration on the video display units 102a and 102b.

In step F-02, the user presses the button SW2 of the calibration controller 112. In response to the pressing, the movement drive unit 12 drives the visibility change drive units 104a and 104b to perform a visibility adjustment.

In step F-08, the analog processing unit 117 detects a voltage (switch voltage) in a state in which the button SW3 is pressed, as an analog voltage. The drive parameter storage units 115a and 115b also store time information and the switch voltage within a predetermined section that have been detected using the analog processing unit 117, while the optical elements 103a and 103b are moving by being driven by the visibility change drive units 104a and 104b. In the present embodiment, a switch voltage applied before the press of the button SW3 is started is denoted by Vd, and a switch voltage applied after the press ends is denoted by V0.

While viewing the video on the video display unit 11, the user searches for a position where visibility is adjusted (position where the video is in focus and easy to be observed), and presses the button SW3 when the optical elements 103a and 103b reach the position where the video is observed most appropriately. In response to the pressing, an electric signal serving as a stop command is transmitted to the visibility change drive units 104a and 104b in the movement drive unit 12. In the analog processing unit 117, the time when the switch voltage becomes the switch voltage V0 (when the press ends) corresponds to a timing at which the button SW3 is pressed.

In step F-09, using time information regarding the time when the button SW3 has started to be pressed, and time information regarding the time when the press of the button SW3 has ended, which are stored in the drive parameter storage units 115a and 115b serving as a third storage unit, the calculation unit 116 calculates the time interval T between these times. Here, the time information regarding the time when the button SW3 has started to be pressed indicates a time at a time point at which a switch voltage has started to drop from the switch voltage Vd, and the time information regarding the time when the press of the button SW3 has ended indicates a time at a time point at which the switch voltage has dropped to the switch voltage V0.

In the present embodiment, the time interval T from the time when the user has started to press the button SW3 as a stop operation, to the time when the press of the button SW3 has ended is a time interval taken to switching of the button SW3. If a position at a time point at which the button SW3 has started to be pressed is the stop position 3, the stop position 3 shifts from a detection position at a time point at which the press of the button SW3 has ended (position at a timing at which the button SW3 has been pressed), by a distance corresponding to the time interval T, which is an operation time (corresponding stop operation distance). In the present embodiment, in step F-10, a time taken to perform a switch operation is factored in, so that the calculation unit 116 determines the stop position 3 by calculating a return amount $\alpha2$ serving as a corresponding stop operation distance at the time interval T. Information regarding the determined stop position 3 is stored into the drive parameter storage units 115a and 115b.

Specifically, in the case of the time interval T, the return amount $\alpha2$ and the stop position 3 are represented as follows:

$$\alpha2 = V \times N \times T \times T0 \quad ,$$

and

$$\text{Stop Position 3} = \text{Detection Position} - \alpha2 \quad ,$$

where V denotes an actuator drive speed at a time point at which the press of the button SW3 has ended (speed at a timing at which the button SW3 has been pressed) in the case of the time interval T, N denotes a coefficient of a speed, and T0 is a coefficient of a time.

The time interval T sometimes varies depending on the user. A case where the time interval T varies while visibility remains the same (the stop position 3 remains the same) is described. In Fig. 14B, T1 indicates a time interval of switching in a case where the button SW3 has been pressed in a short period of time (indicated by a solid line in Fig. 14B), and T2 indicates a time interval of switching in a case where the button SW3 has been pressed in a long period of time (indicated by a dashed-dotted line in Fig. 14B). A position at a time point at which the press of the button SW3 has ended in a case where a time interval is the time interval T1 is described as a detection position A, and a position at a time point at which the press of the button SW3 has ended in a case where a time interval is the time interval T2 is described as a detection position B.

In a case where a time interval is the time interval T1, a return amount $\alpha21$ and the stop position 3 are represented as follows.

$$\alpha21 = V1 \times N \times T1 \times T0$$

$$\text{Stop Position 3} = \text{Detection Position A} - \alpha21$$

In a case where a time interval is the time interval T2, a return amount $\alpha22$ and the stop position 3 are represented as follows:

$$\alpha22 = V2 \times N \times T2 \times T0 \quad ,$$

and

$$\text{Stop Position 3} = \text{Detection Position B} - \alpha22 \quad ,$$

where V1 and V2 denote actuator drive speeds at a time point at which the press of the button SW3 has ended (a speed at a timing at which the button SW3 has been pressed) in a case where time intervals are the time intervals T1 and T2, respectively.

From the stop position 1 where the stop command has been received, the movement drive unit 12 inversely drives the actuators of the visibility change drive units 104a and 104b. In step F-11, using the information regarding the stop position 3 calculated and stored in step F-10, the visibility change drive units 104a and 104b move the optical elements 103a and 103b to the stop position 3 in such a manner as to return the optical elements 103a and 103b by an overrun distance, and stops the optical elements 103a and 103b.

As described above, in the video display apparatus, the visibilities of the right eye 2b and the left eye 2a of the user are simultaneously adjusted.

In the present embodiment, the movement drive unit 12 performs driving to return the optical elements 103a and 103b, which have moved excessively, to the stop position 3 which is calculated using the various drive parameters and is a position at a time point at which the button SW3 has started to be pressed. In this manner, the optical elements 103a and 103b are returned by a distance corresponding to the overrun that has occurred from when the button SW3 has started to be pressed, without being affected by a time taken to perform switching, and the position of the visibility adjustment is able to be set to the stop position 3. With this configuration, the optical elements 103a and 103b are stopped at positions as closer as possible to a position at which the user desires to stop the optical elements 103a and 103b, and video adjustment most appropriate for the user is performed.

As described above, according to the present embodiment, a video display apparatus that prevents generation of an adjustment shift in visibility adjustment and displays a clear video is implemented with a relatively-simple configuration.

Also, in the present embodiment, an operation delay from a time point at which a visibility-adjusted state has been visually recognized, to the time when the button SW3 has actually started to be pressed may be factored in, similar to the second embodiment. For example, in the above-described adjustment method, a position further shifted from the stop position 3 which is a position at a time point at which the button SW3 has started to be pressed, by a distance corresponding to a delay time is set as a stop index position (= stop position 3 - return amount $\alpha1$). That is, in step F-10, the stop index position is acquired as follows.

$$\text{Stop Index Position} = \text{Stop Position 3} - \alpha1$$

$$= \text{Detection Position} - \alpha2 - \alpha1.$$

Then, in step F-11, the visibility change drive units 104a and 104b return the optical elements 103a and 103b moved excessively, to the stop index position at which the user has visually recognized the visibility adjustment. With this configuration, the position of the visibility adjustment is further closer to the stop index position more accurately, and video adjustment most appropriate for the user is performed.

Also, in the present embodiment, similarly to the modification example of the first embodiment, the above-described visibility adjustment may be performed sequentially and independently for the right eye 2b and the left eye 2a of the user. In this case, even in a case where visual power varies between the left and right eyes of the user, a visibility adjustment for each of the left and right eyes is precisely performed to prevent an occurrence of an adjustment shift in visibility adjustment, whereby a clear video is able to be displayed.

Subsequently, a fourth embodiment of the present disclosure will be described.

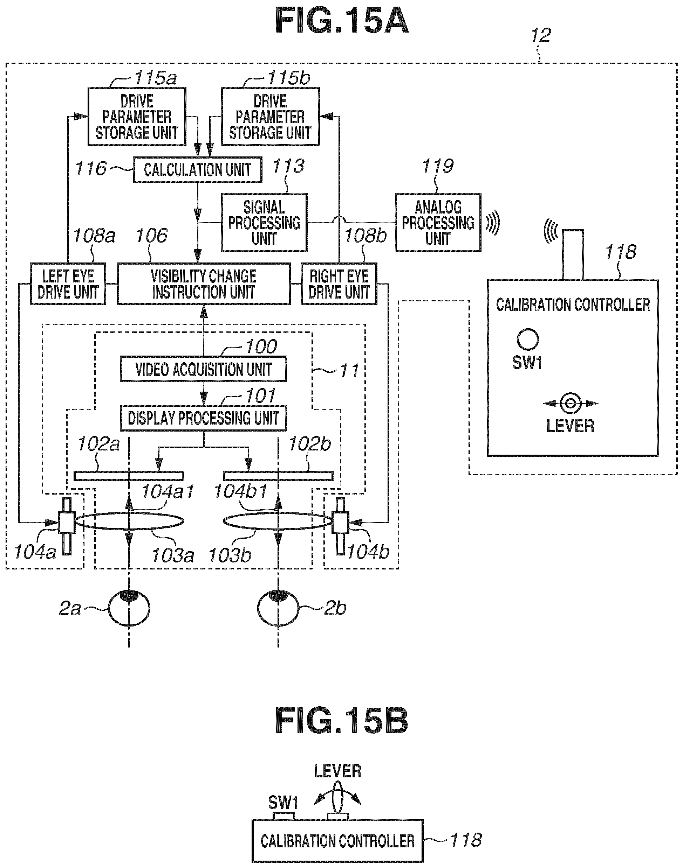

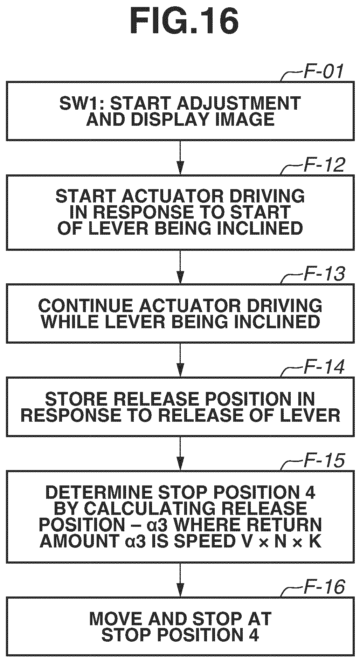

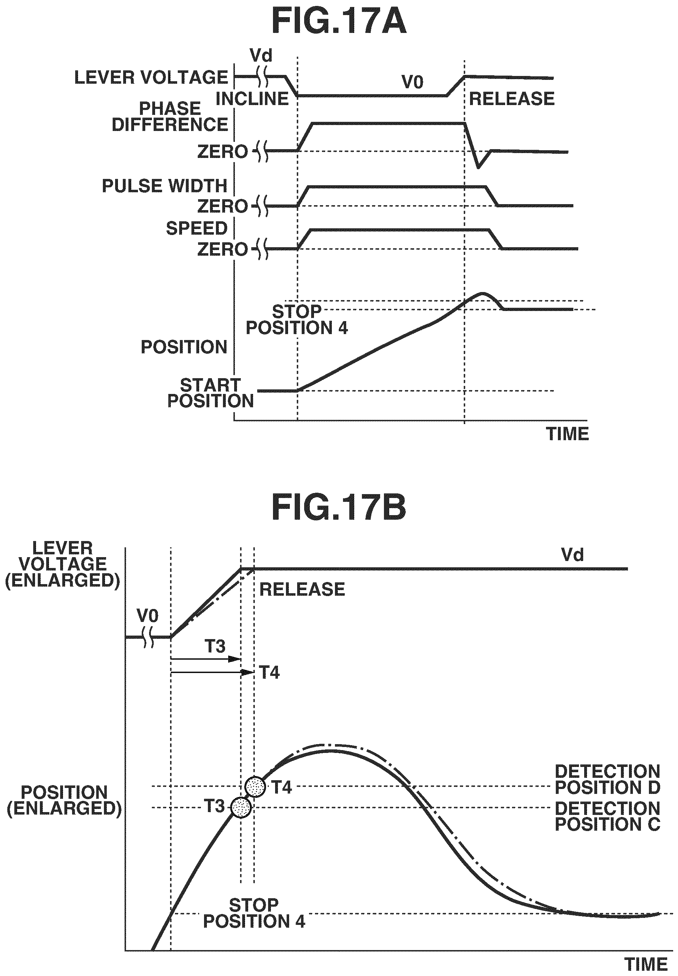

Figs. 15A and 15B are schematic diagrams illustrating a configuration of a video display apparatus according to the present embodiment. Fig. 15A is an apparatus overall view, and Fig. 15B is a side view of a calibration controller 118. In Figs. 15A and 15B, the same components as those illustrated in Figs. 1A and 1B are assigned the same reference numerals, and the detailed description will be omitted. Fig. 16 is a flowchart illustrating a visibility adjustment method in the video display apparatus according to the present embodiment. Figs. 17A and 17B are timing charts each illustrating a state that is caused in response to a lever of an operation unit being operated in the calibration controller 118 according to the present embodiment. Fig. 17A illustrates a voltage applied by a lever operation, a phase difference, a pulse width, an actuator speed, and positions of the optical element including a stop position, and Fig. 17B illustrates the voltage applied by a lever operation and positions in an enlarged manner.

(Configuration of Video Display Apparatus)

In a video display apparatus according to the present embodiment, in place of the calibration controller 112 and the analog processing unit 117 according to the third embodiment in Figs. 12A and 12B, the calibration controller 118 and an analog processing unit 119 are provided. The calibration controller 118 includes an operation unit including a lever like a so-called joystick for the user to issue a drive instruction to a movement drive unit 12, in place of the buttons SW2 and SW3, and outputs a radio signal corresponding to the inclination of the lever. The analog processing unit 119 receives the radio signal from the calibration controller 118, and performs analog-processing on received output voltages of a button SW1 and the lever. In the present embodiment, because the calibration controller 118 and the analog processing unit 119 are wirelessly and electrically connected, usability of the user further improves as compared with the case using wired connection.

(Visibility Adjustment Method in Video Display Apparatus)

Hereinafter, a visibility adjustment method in the video display apparatus according to the present embodiment will be described.

In step F-01, the user presses the button SW1 of the calibration controller 112 to perform calibration according to the present embodiment and starts a calibration operation. In this processing, the video display unit 11 displays a video for calibration on video display units 102a and 102b.

In step F-12, the user starts an operation of inclining the lever of the operation unit. In the present embodiment, actuators of visibility change drive units 104a and 104b are operated by the inclination of the lever instead of switching performed by a press of the button. With this configuration, the movement drive unit 12 drives the visibility change drive units 104a and 104b for the visibility adjustment.

In step F-13, while the user is performing a lever inclining operation, the driving of the visibility change drive units 104a and 104b is continued. The analog processing unit 119 detects a voltage applied in a state in which the lever is inclined, as an analog voltage. Here, when the lever is inclined and a voltage is a switch voltage V0, the actuators are driven, and when the lever is not inclined and a voltage is a switch voltage Vd, the actuators stop.

While viewing the video on the video display unit 11, the user searches for a position where visibility is adjusted (position where the video is in focus and easy to be observed), and releases the lever when the optical elements 103a and 103b reach the position where the video is observed most appropriately. In response to the releasing, an electric signal serving as a stop command is transmitted to the visibility change drive units 104a and 104b in the movement drive unit 12. In the present embodiment, in the analog processing unit 117, the inclination of the lever starts to return by a release operation of the lever, the voltage rises from the switch voltage V0, and the time when the inclination of the lever becomes 0 and the voltage reaches the switch voltage Vd corresponds to a timing at which the lever is released. In step F-14, drive parameter storage units 115a and 115b store a detection position at the timing of the moment at which the voltage has changed from the switch voltage V0 to the switch voltage Vd based on an electric signal output from the calibration controller 118 by the lever being released, as a release position of the lever.

In the present embodiment, the time interval T from the time when the user has released the inclined lever, to the time when the lever has returned to a non-inclined state corresponds to a time taken to perform a stop operation. A position at a time point at which a release operation of the lever has been started (the hand of the user has released the lever) is described as a stop position 4 which is a stop index position. The stop position 4 shifts from a release position at a time point at which the lever has been released (the inclination of the lever has reached 0), by a distance corresponding to the time interval T (corresponding stop operation distance). In the present embodiment, in step F-15, the calculation unit 116 determines the stop position 4 by calculating a return amount α3 which is a corresponding stop operation distance. Information regarding the determined stop position 4 is stored into the drive parameter storage units 115a and 115b.

Specifically, in a case where a time interval is the time interval T, the return amount α3 and the stop position 4 are represented as follows:

$$\alpha 3 = V \times N \times K \quad ,$$

and

$$\text{Stop Position 4} = \text{Release Position} - \alpha 3 \quad ,$$

where V denotes an actuator drive speed at the release position of the lever (drive speed at a timing at which the inclination of the lever becomes 0), N denotes a coefficient of a speed, and K denotes a value obtained by multiplying the time interval T by a coefficient (constant number).

Specifically, the processing in step F-15 is executed as follows.

Fig. 17B illustrates a case where the time interval T is a time interval T3 (indicated by a solid line in Fig. 17B), and a case where the time interval T is a time interval T4 (indicated by a dashed-dotted line in Fig. 17B). A release position of the lever in a case where a time interval is the time interval T3 is described as a detection position C, and a release position of the lever in a case where a time interval is the time interval T4 is described as a detection position D. In the third embodiment, a time (the time interval T) taken to press the button SW3 varies among users. In contrast to this, in the stop operation in the present embodiment, an operation to be performed by the user is an operation of releasing the lever, and after that, the lever automatically returns to a non-inclined state. Thus, the time interval T hardly varies (T3 ≈ T4), and the time interval T can be regarded as a constant number. In this manner, since the time interval T taken to perform a stop operation remains substantially constant irrespective of the user, a fixed value is able to be set as K in the above formula.

In this manner, in the present embodiment, since the time interval T taken to return to a non-inclined state from a lever-inclined state is almost a fixed value irrespective of the user, the stop position 4 is able to be determined by relatively simple calculation.

From the stop position 1 where the stop command has been received, the movement drive unit 12 inversely drives the actuators of the visibility change drive units 104a and 104b. In step F-16, using information regarding the stop position 4 calculated and stored in step F-15, the visibility change drive units 104a and 104b move the optical elements 103a and 103b to the stop position 4 in such a manner as to return the optical elements 103a and 103b by an overrun distance, and stop the optical elements 103a and 103b.

As described above, in the video display apparatus, the visibilities of the right eye 2b and the left eye 2a of the user are simultaneously adjusted.

In the present embodiment, the movement drive unit 12 performs an operation of returning the optical elements 103a and 103b, which have moved excessively, to the stop position 4 which is a position at a time point at which the lever has started to be inclined (voltage has started to rise from the switch voltage V0). Since a stop index position is determined by the user releasing the lever, the setting of the stop index position hardly varies, and the optical elements 103a and 103b are stopped at positions as closer as possible to a position at which the user desires to stop the optical elements 103a and 103b, whereby video adjustment most appropriate for the user is performed.

As described above, according to the present embodiment, a video display apparatus that prevents generation of an adjustment shift in visibility adjustment and displays a clear video is implemented with a relatively-simple configuration.

Also, in the present embodiment, an operation delay of the user from a time point at which a visibility-adjusted state has been visually recognized, to the time when an inclination operation of the lever has been actually started may be factored in, in view of the second embodiment. For example, in the above-described adjustment method, a position further shifted from the stop position 4 which is a position at a time point at which the lever has started to be inclined, by a distance corresponding to a delay time is set as a stop index position (= Stop Position 4 - Return Amount $\alpha 1$). Here, a return amount $\alpha 1$ which is a corresponding delay distance is a value obtained by multiplying an actuator drive speed V at the time point at which the lever has been inclined, by the coefficient N determined from a drive frequency, a phase difference, a pulse width, and personal characteristics of the user. In this case, in step F-15, the stop index position is acquired as follows.

$$\text{Stop Index Position} = \text{Stop Position } 4 - \alpha 1$$

$$= \text{Release Position} -\alpha 3 -\alpha 1$$

Then, in step F-16, the visibility change drive units 104a and 104b return the optical elements 103a and 103b, which have excessively moved, to the stop index position at which the user has visually recognized the visibility adjustment. The position of the visibility adjustment is further closer to the stop index position more accurately, and video adjustment most appropriate for the user is performed.

Also, in the present embodiment, similarly to the modification example of the first embodiment, the above-described visibility adjustment may be performed sequentially and independently for the right eye 2b and the left eye 2a of the user. In this case, even in a case where visual power varies between the left and right eyes of the user, a visibility adjustment for each of the left and right eyes is precisely performed to prevent an occurrence of an adjustment shift in visibility adjustment, whereby a clear video is able to be displayed.

The disclosure of the embodiments and the modification example includes the following configurations and method.

(Configuration 1)

A video display apparatus comprising: a video display unit; an optical element; and a movement drive unit configured to change relative positions of the video display unit and the optical element, wherein the movement drive unit determines a stop index position in accordance with a timing at which a stop operation has been performed, and sets the relative positions using the stop index position as a target.

(Configuration 2)

The video display apparatus according to Configuration 1, wherein the movement drive unit sets the relative positions by returning a position of the optical element to the stop index position from a state in which the position of the optical element exceeds the stop index position.

(Configuration 3)

The video display apparatus according to Configuration 2, wherein the movement drive unit includes a storage unit configured to store the stop index position, and wherein the movement drive unit sets the relative positions using the stop index position stored in the storage unit.

(Configuration 4)

The video display apparatus according to Configuration 2 or 3, wherein the movement drive unit sets the relative positions using a position obtained by subtracting a delay distance corresponding to a delay of a start of the stop operation performed by a user, from a position where a stop instruction from the user has been received, as the stop index position.

(Configuration 5)

The video display apparatus according to Configuration 4, wherein the delay distance is a value obtained by multiplying a speed at the position where the stop instruction has been received, by a predetermined coefficient.

(Configuration 6)

The video display apparatus according to Configuration 2 or 3, wherein the movement drive unit acquires a corresponding stop operation distance using a time interval at which a user performs the stop operation, and wherein the movement drive unit sets the relative positions using a position obtained by subtracting the corresponding stop operation distance from a position where a stop instruction from a user is received, as the stop index position.

(Configuration 7)

The video display apparatus according to Configuration 6, wherein the corresponding stop operation distance is a value obtained by multiplying a speed at the position where the stop instruction has been received, by a coefficient relating to a speed, the time interval, and a coefficient relating to a time.

(Configuration 8)

The video display apparatus according to Configuration 2 or 3, wherein the movement drive unit acquires a corresponding stop operation distance using a time interval at which a user performs a stop operation, and wherein the movement drive unit sets the relative positions using a position obtained by subtracting the corresponding stop operation distance and a delay distance corresponding to a delay of a start of the stop operation performed by a user, from a position at which a stop instruction from a user has been received, as the stop index position.

(Configuration 9)

The video display apparatus according to Configuration 2 or 3, wherein the movement drive unit acquires a corresponding stop operation distance using a release position at which an operation unit has ended the stop operation, and wherein the movement drive means sets the relative positions using a position obtained by subtracting the corresponding stop operation distance from the release position, as the stop index position.

(Configuration 10)

The video display apparatus according to Configuration 9, wherein the corresponding stop operation distance is a value obtained by multiplying a speed at the release position by a coefficient and a fixed value relating to a time.

(Configuration 11)

The video display apparatus according to Configuration 2 or 3, wherein the movement drive unit acquires a corresponding stop operation distance using a release position at which an operation unit has ended the stop operation, and wherein the movement drive unit sets the relative positions using a position obtained by subtracting the corresponding stop operation distance and a delay distance corresponding to a delay of a start of the stop operation performed by a user, from the release position, as the stop index position.

(Configuration 12)

The video display apparatus according to any one of Configurations 1 to 11, wherein the video display apparatus includes a left eye adjustment mode and a right eye adjustment mode, wherein, in the left eye adjustment mode, the movement drive unit sets the relative positions of the video display unit for a left eye and the optical element for the left eye regarding the left eye of the user, and wherein, in the right eye adjustment mode, the movement drive unit sets the relative positions of the video display unit for a right eye and the optical element for the right eye regarding the right eye of the user.

(Configuration 13)

The video display apparatus according to any one of Configurations 1 to 12, wherein the movement drive unit includes an actuator configured to relatively move the video display unit and the optical element, and an operation unit for a user to issue a drive instruction to the actuator.

(Configuration 14)

The video display apparatus according to Configuration 13, wherein the operation unit is configured to be electrically connected to and separated from the actuator.

(Configuration 15)

The video display apparatus according to Configuration 13, wherein the operation unit and the actuator are electrically connected wirelessly.

(Configuration 16)

The video display apparatus according to any one of Configurations 13 to 15, wherein the actuator is an ultrasonic motor.

(Configuration 17)

The video display apparatus according to any one of Configurations 13 to 16, wherein, after the stop operation is performed, the actuator performs inverse driving by reversing a phase difference of a drive waveform.

(Configuration 18)

The video display apparatus according to any one of Configurations 13 to 17, wherein the actuator is provided to the optical element, and moves the optical element with respect to the video display unit.

(Method 1)

An adjustment method of a video display apparatus comprising: using a movement drive unit configured to change relative positions of a video display unit and an optical element; determining a stop index position in accordance with a timing at which a stop operation has been performed; and setting the relative positions using the stop index position as a target.

According to the present disclosure, a video display apparatus that prevents generation of an adjustment shift in visibility adjustment and displays a clear video is implemented with a relatively-simple configuration.

While the present invention has been described with reference to exemplary embodiments, it is to be understood that the invention is not limited solely to the disclosed exemplary embodiments but rather the embodiments serve as a guide to implement the invention of the claims or the invention of the configurations. The scope of the following claims is to be accorded the broadest interpretation so as to encompass all such modifications and equivalent structures and functions as would be understood by the skilled person.

**Claims**

1. A video display apparatus comprising:

video display means (102a, 102b);
an optical element (103a, 103b); and
movement drive means (12) for configured to changing relative positions of the video display unit and the optical element,
wherein the movement drive means is configured to determines a stop index position in accordance with a timing at which a stop operation has been performed, and is configured to sets the relative positions using the stop index position as a target.

2. The video display apparatus according to claim 1, wherein the movement drive means (12) is configured to sets the relative positions by returning a position of the optical element (103a, 103b) to the stop index position from a state in which the position of the optical element exceeds the stop index position.

3. The video display apparatus according to claim 2,

wherein the movement drive means (12) includes storage means (114a, 114b, 115a, 115b) for configured to storing the stop index position, and
wherein the movement drive means is configured to sets the relative positions using the stop index position stored in the storage means.

4. The video display apparatus according to claim 2, wherein the movement drive means (12) is configured to sets the relative positions using a position obtained by subtracting a delay distance corresponding to a delay of a start of the stop operation performed by a user, from a position where a stop instruction from the user has been received, as the stop index position.

5. The video display apparatus according to claim 4, wherein the delay distance is a value obtained by multiplying a speed at the position where the stop instruction has been received, by a predetermined coefficient.

6. The video display apparatus according to claim 2,

wherein the movement drive means (12) is configured to acquires a corresponding stop operation distance using a time interval at which a user performs the stop operation, and
wherein the movement drive means is configured to sets the relative positions using a position obtained by subtracting the corresponding stop operation distance from a position where a stop instruction from a user is received, as the stop index position.

7. The video display apparatus according to claim 6, wherein the corresponding stop operation distance is a value obtained by multiplying a speed at the position where the stop instruction has been received, by a coefficient relating to a speed, the time interval, and a coefficient relating to a time.

8. The video display apparatus according to claim 2,

wherein the movement drive means (12) is configured to acquires a corresponding stop operation distance using a time interval at which a user performs a stop operation, and
wherein the movement drive means is configured to sets the relative positions using a position obtained by subtracting the corresponding stop operation distance and a delay distance corresponding to a delay of a start of the stop operation performed by a user, from a position at which a stop instruction from a user has been received, as the stop index position.

9. The video display apparatus according to claim 2,

wherein the movement drive means (12) is configured to acquires a corresponding stop operation distance using a release position at which operation means has ended the stop operation, and
wherein the movement drive means is configured to sets the relative positions using a position obtained by subtracting the corresponding stop operation distance from the release position, as the stop index position.

10. The video display apparatus according to claim 9, wherein the corresponding stop operation distance is a value obtained by multiplying a speed at the release position by a coefficient and a fixed value relating to a time.

**11.** The video display apparatus according to claim 2,

wherein the movement drive means (12) is configured to acquires a corresponding stop operation distance using a release position at which operation means has ended the stop operation, and

wherein the movement drive means is configured to sets the relative positions using a position obtained by subtracting the corresponding stop operation distance and a delay distance corresponding to a delay of a start of the stop operation performed by a user, from the release position, as the stop index position.

**12.** The video display apparatus according to any one of claims 1 to 11,

wherein the video display apparatus (102a, 102b) includes a left eye adjustment mode and a right eye adjustment mode,

wherein, in the left eye adjustment mode, the movement drive means (12) is configured to sets the relative positions of the video display means for a left eye and the optical element for the left eye regarding the left eye of the user, and

wherein, in the right eye adjustment mode, the movement drive means is configured to sets the relative positions of the video display means for a right eye and the optical element for the right eye regarding the right eye of the user.

**13.** The video display apparatus according to any one of claims 1 to 12, wherein the movement drive means (12) includes

an actuator (104a, 104b) for configured to relatively moving move the video display means and the optical element (103a, 103b), and

operation means (SW1, SW2, SW3) for configured to receiving a drive instruction issued by the user to the actuator.

**14.** The video display apparatus according to claim 13, wherein the operation means (SW1, SW2, SW3) is for being configured to be electrically connected to and electrically separated from the actuator (104a, 104b).

**15.** The video display apparatus according to claim 13 or claim 14, wherein the operation means (SW1, SW2, SW3) and the actuator (104a, 104b) are electrically connected wirelessly.

**16.** The video display apparatus according to any one of claims 13 to 15, wherein the actuator (104a, 104b) is an ultrasonic motor.

**17.** The video display apparatus according to any one of claims 13 to 16, wherein, after the stop operation is performed, the actuator (104a, 104b) performs inverse driving by reversing a phase difference of a drive waveform.

**18.** The video display apparatus according to any one of claims 13 to 17, wherein the actuator (104a, 104b) is provided to the optical element (103a, 103b), and moves the optical element with respect to the video display means (102a, 102b).

**19.** An adjustment method of a video display apparatus comprising:

using movement drive means (12) for configured to changing relative positions of video display means (102a, 102b) and an optical element (103a, 103b);

determining a stop index position in accordance with a timing at which a stop operation has been performed; and

setting the relative positions using the stop index position as a target.

EP 4 671 849 A1

# FIG.1A

*12*

POSITION STORAGE UNIT *114a*

POSITION STORAGE UNIT *114b*

SIGNAL PROCESSING UNIT *113*

*108a* *106*

*108b*

*112*

LEFT EYE DRIVE UNIT

VISIBILITY CHANGE INSTRUCTION UNIT

RIGHT EYE DRIVE UNIT

CALIBRATION CONTROLLER

VIDEO ACQUISITION UNIT *100*

*11*

DISPLAY PROCESSING UNIT *101*

SW1  SW2  SW3

*102a*

*102b*

*104a1*  *104b1*

*104a*  *103a*  *103b*  *104b*

*2a*  *2b*

# FIG.1B

SW1  SW2  SW3

CALIBRATION CONTROLLER  *112*

19

# FIG.2A

105a,b

102a,b

i

103a,b

2a,b

103a1,b1

# FIG.2B

105a,b

i

102a,b

103a,b

2a,b

103a1,b1

# FIG.3

*200*

*305*

PULSE WIDTH
CONVERSION
UNIT

~*210*

*304*

FREQUENCY
CONVERSION
UNIT

*220*

*301*

COMMAND
POSITION
GENERATION
UNIT

*302*

CONTROL
AMOUNT
CALCULATION
UNIT

*303*

PHASE
DIFFERENCE
CONVERSION
UNIT

*309*

ALTERNATING-
CURRENT SIGNAL
GENERATION
UNIT

*310*

BOOSTER
CIRCUIT

*104*~

VIBRATION-
TYPE
ACTUATOR

*120*

POSITION
DETECTION UNIT

# FIG.4

_F-01_

SW1: START ADJUSTMENT
AND DISPLAY IMAGE

_F-02_

SW2: START
ACTUATOR DRIVING

_F-03_

SW3: ISSUE ACTUATOR STOP
COMMAND AND STORE POSITION
(STOP POSITION 1)

_F-04_

MOVE AND STOP AT
STOP POSITION 1

# FIG.5

# FIG.6A

# FIG.6B

# FIG.7

# FIG.8A

*F-21*

| PRESS SW1 TWICE TO SET LEFT EYE ADJUSTMENT MODE |
|---|

↓ *F-22*

| SW1: START LEFT EYE ADJUSTMENT AND DISPLAY IMAGE |
|---|

↓ *F-23*

| SW2: START LEFT EYE ACTUATOR DRIVING |
|---|

↓ *F-24*

| SW3: ISSUE LEFT EYE ACTUATOR STOP COMMAND AND STORE LEFT EYE POSITION (STOP POSITION 1a) |
|---|

↓ *F-25*

| MOVE AND STOP AT STOP POSITION 1a |
|---|

# FIG.8B

*F-31*

| PRESS SW1 THREE TIMES TO SET RIGHT EYE ADJUSTMENT MODE |
|---|

↓ *F-32*

| SW1: START RIGHT EYE ADJUSTMENT AND DISPLAY IMAGE |
|---|

↓ *F-33*

| SW2: START RIGHT EYE ACTUATOR DRIVING |
|---|

↓ *F-34*

| SW3: ISSUE RIGHT EYE ACTUATOR STOP COMMAND AND STORE RIGHT EYE POSITION (STOP POSITION 1b) |
|---|

↓ *F-35*

| MOVE AND STOP AT STOP POSITION 1b |
|---|

# FIG.9A

*12*

*115a* — DRIVE PARAMETER STORAGE UNIT

*115b* — DRIVE PARAMETER STORAGE UNIT

*116* — CALCULATION UNIT  *113*

SIGNAL PROCESSING UNIT

*108a*  *106*

*108b*

*112*

LEFT EYE DRIVE UNIT

VISIBILITY CHANGE INSTRUCTION UNIT

RIGHT EYE DRIVE UNIT

CALIBRATION CONTROLLER

*100* — VIDEO ACQUISITION UNIT

*11*

*101* — DISPLAY PROCESSING UNIT

○ SW1   ○ SW2   ○ SW3

*102a*

*102b*

*104a1*  *104b1*

*104a*

*103a*  *103b*

*104b*

*2a*

*2b*

# FIG.9B

SW1   SW2   SW3

CALIBRATION CONTROLLER  — *112*

# FIG.10

F-01

SW1: START ADJUSTMENT
AND DISPLAY IMAGE

F-02

SW2: START
ACTUATOR DRIVING

F-05

SW3: ISSUE ACTUATOR STOP
COMMAND AND STORE POSITION
AND DRIVE PARAMETER

F-06

DETERMINE STOP POSITION 2 BY
CALCULATING STOP POSITION AT
SW3 PRESSING − α1, Ex: RETURN
AMOUNT α1 = SPEED V × N

F-07

MOVE AND STOP AT
STOP POSITION 2

# FIG.11

SW3 VOLTAGE

PHASE DIFFERENCE

ZERO

PULSE WIDTH

ZERO

SPEED

ZERO

POSITION

OVERRUN

STOP POSITION 1

STOP POSITION 2

TIME

# FIG.12A

# FIG.12B

# FIG.13

F-01
┌──────────────────────────┐
│ SW1: START ADJUSTMENT    │
│ AND DISPLAY IMAGE        │
└──────────────────────────┘

F-02
┌──────────────────────────┐
│ SW2: START               │
│ ACTUATOR DRIVING         │
└──────────────────────────┘

F-08
┌──────────────────────────┐
│ DETECT SW3 VOLTAGE       │
│ AND STORE SW3 VOLTAGE    │
│ OF PREDETERMINED SECTION │
└──────────────────────────┘

F-09
┌──────────────────────────┐
│ SW3: ISSUE ACTUATOR STOP │
│ COMMAND AND CALCULATE    │
│ SW3 PRESS TIME INTERVAL T│
└──────────────────────────┘

F-10
┌──────────────────────────────────┐
│ DETERMINE STOP POSITION 3 BY     │
│ CALCULATING DETECTION            │
│ POSITION – α2 WHERE RETURN       │
│ AMOUNT α2 IS SPEED V × N × T × T0│
└──────────────────────────────────┘

F-11
┌──────────────────────────┐
│ MOVE AND STOP AT         │
│ STOP POSITION 3          │
└──────────────────────────┘

# FIG.14A

# FIG.14B

# FIG.15A

12

115a
DRIVE PARAMETER STORAGE UNIT

115b
DRIVE PARAMETER STORAGE UNIT

116 — CALCULATION UNIT   113

119
ANALOG PROCESSING UNIT

SIGNAL PROCESSING UNIT

108a   106

LEFT EYE DRIVE UNIT

VISIBILITY CHANGE INSTRUCTION UNIT

108b

RIGHT EYE DRIVE UNIT

118
CALIBRATION CONTROLLER

SW1

LEVER

100
VIDEO ACQUISITION UNIT

11

101
DISPLAY PROCESSING UNIT

102a          102b

104a1   104b1

104a

103a   103b

104b

2a          2b

# FIG.15B

LEVER

SW1

CALIBRATION CONTROLLER   118

# FIG.16

F-01
┌─────────────────────────────┐
│   SW1: START ADJUSTMENT      │
│     AND DISPLAY IMAGE        │
└─────────────────────────────┘
              │
              ▼
F-12
┌─────────────────────────────┐
│   START ACTUATOR DRIVING     │
│    IN RESPONSE TO START      │
│  OF LEVER BEING INCLINED     │
└─────────────────────────────┘
              │
              ▼
F-13
┌─────────────────────────────┐
│  CONTINUE ACTUATOR DRIVING   │
│  WHILE LEVER BEING INCLINED  │
└─────────────────────────────┘
              │
              ▼
F-14
┌─────────────────────────────┐
│  STORE RELEASE POSITION IN   │
│ RESPONSE TO RELEASE OF LEVER │
└─────────────────────────────┘
              │
              ▼
F-15
┌─────────────────────────────┐
│  DETERMINE STOP POSITION 4   │
│   BY CALCULATING RELEASE     │
│ POSITION − α3 WHERE RETURN   │
│ AMOUNT α3 IS SPEED V × N × K │
└─────────────────────────────┘
              │
              ▼
F-16
┌─────────────────────────────┐
│     MOVE AND STOP AT         │
│      STOP POSITION 4         │
└─────────────────────────────┘

# FIG.17A

# FIG.17B

Europäisches Patentamt
European Patent Office
Office européen des brevets

# EUROPEAN SEARCH REPORT

**Application Number**

EP 25 18 0541

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/233231 A1 (SEMICONDUCTOR ENERGY LAB [JP]) 7 December 2023 (2023-12-07) | 1-19 | INV. G02B27/01 |
| Y | * abstract; figures 14a, 14b, 16 * <br> * paragraphs [0033], [0096] * | 4-11 | |
| X | US 11 622 680 B1 (MERRIAM RYAN R [US] ET AL) 11 April 2023 (2023-04-11) | 1,12,19 | |
| Y | * abstract; figures 1,8-11 * <br> * columns 47,55 * <br> * column 24, paragraph 3 * | 4-11 | |
| Y | US 2021/297576 A1 (HIROSE KENJI [JP]) 23 September 2021 (2021-09-23) <br> * abstract; figures 3,7,9,11 * | 4-11 | |
| Y | JP 2013 190735 A (OLYMPUS IMAGING CORP) 26 September 2013 (2013-09-26) <br> * abstract * <br> * paragraphs [0004], [0005], [0046] - [0048] * | 4-11 | |

**TECHNICAL FIELDS SEARCHED (IPC)**

G02B
A61B

The present search report has been drawn up for all claims

| Place of search | Date of completion of the search | Examiner |
|---|---|---|
| Munich | 10 November 2025 | Elflein, Wilhelm |

EPO FORM 1503 03.82 (P04C01)

## ANNEX TO THE EUROPEAN SEARCH REPORT
## ON EUROPEAN PATENT APPLICATION NO.

EP 25 18 0541

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2025

| Patent document cited in search report | Publication date | Patent family member(s) | Publication date |
|---|---|---|---|
| WO 2023233231 A1 | 07-12-2023 | CN 119213349 A<br>JP WO2023233231 A1<br>KR 20250019651 A<br>US 2025275438 A1<br>WO 2023233231 A1 | 27-12-2024<br>07-12-2023<br>10-02-2025<br>28-08-2025<br>07-12-2023 |
| US 11622680 B1 | 11-04-2023 | NONE | |
| US 2021297576 A1 | 23-09-2021 | NONE | |
| JP 2013190735 A | 26-09-2013 | CN 103312979 A<br>JP 5635546 B2<br>JP 2013190735 A | 18-09-2013<br>03-12-2014<br>26-09-2013 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023032278 A